Europäisches Patentamt

European Patent Office

Office européen des brevets

(11) Veröffentlichungsnummer: **0 209 813 B1**

# EUROPÄISCHE PATENTSCHRIFT

(45) Veröffentlichungstag der Patentschrift: **05.08.92**

(21) Anmeldenummer: **86109548.7**

(22) Anmeldetag: **11.07.86**

(51) Int. Cl.⁵: **G11B 15/473**, G11B 15/467

(54) **Recorder.**

(30) Priorität: **20.07.85 DE 3526017**

(43) Veröffentlichungstag der Anmeldung:
**28.01.87 Patentblatt 87/05**

(45) Bekanntmachung des Hinweises auf die
Patenterteilung:
**05.08.92 Patentblatt 92/32**

(84) Benannte Vertragsstaaten:
**AT BE CH DE FR GB IT LI LU NL SE**

(56) Entgegenhaltungen:
EP-A- 0 142 613      DE-A- 2 639 895
NL-A- 7 801 868      US-A- 3 202 769
US-A- 4 044 388      US-A- 4 065 787

GRUNDIG TECHNISCHE INFORMATIONEN,
Band 24, Nr. 2, 1977, Seiten 41-44; LJ. MIJA-
TOVIC: "BK 3000 color Band-
Kopf-Servosystem"

RESEARCH DISCLOSURE, Nr. 173, September
1978, Seiten 8-10, Nr. 17336; W.T. FEARNSIDE:
"Video recording format"

PATENT ABSTRACTS OF JAPAN, Band 8, Nr.
74 (E-236)[1511], 6. April 1984; & JP-A-58 222
669

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Keesen, Werner, Dr.-Ing.
Tiestestrasse 5
W-3000 Hannover 1(DE)**
Erfinder: **Oberjatzas, Günter, Dipl.-Ing.
Langenkampstrasse 42
W-3013 Barsinghausen(DE)**
Erfinder: **Hartnack, Wolfgang, Dipl.-Ing.
Saarstrasse 22
W-3005 Hemmingen 1(DE)**
Erfinder: **Habben, Dieter, Dipl.-Ing.
Röntgenstrasse 13
W-3000 Hannover 1(DE)**
Erfinder: **Schäfer, Ralf-Detlef, Dipl.-Ing.
Im Bultfeld 44
W-3005 Hemmingen 4(DE)**
Erfinder: **Peters, Hartmut, Dipl.-Ing.
Wilhelm-Bluhm-Strasse 37
W-3000 Hannover 91(DE)**

(74) Vertreter: **Einsel, Robert, Dipl.-Ing.
Deutsche Thomson-Brandt GmbH Patent-
und Lizenzabteilung Göttinger Chaussee 76
W-3000 Hannover 91(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 209 813 B1

IEEE TRANSACTIONS ON BROADCASTING, Band BC-17, Nr. 1, März 1971, Seiten 29-36; C.H. COLEMAN: "A new technique for time-base stabilization of video recorders"

PATENT ABSTRACTS OF JAPAN, Band 9, Nr. 95 (E-310)[1818], 24. April 1985; & JP-A-59 221 186

## Beschreibung

Die Erfindung betrifft einen Recorder gemäß dem Oberbegriff des Patentanspruchs 1.

Das Buch Videorecorder-Technik, Grundlagen, Schaltungstechnik und Service, erschienen 1982 im Vogel-Verlag, Würzburg, beschreibt im 4. Kapitel, Seite 69 ff die "Steuerung der rotierenden Videoköpfe". In Bild 4.5a auf Seite 73 ist in einem Blockschaltbild die Regelung der Kopfscheibe dargestellt. Die Ist-Drehzahl der Kopfscheibe wird mit Hilfe eines Polschuhes und einer Spule ermittelt und in einem Soll-Ist-Vergleich mit einer Soll-Drehzahl verglichen und ausgewertet. Über eine Siebung, einen Gleichspannungsverstärker und eine Magnetbremse wird die Kopfscheibe nachgeregelt. In den Bildern 4.9 "Prinzipdarstellung eines Bandservo für Aufnahme" und 4.10 "Prinzipdarstellung eines Bandservo für Wiedergabe" ist die Regelung des Bandvorschubes dargestellt. Die Ist-Geschwindigkeit des Bandes wird in Bild 4.9 anhand einer Schwungmasse mit Lagengeber und in Bild 4.10 mit Hilfe einer Synchronspur ermittelt. Dann wird in beiden Bildern der Motor, der die Schwungmasse mit Lagengeber und über diese Schwungmasse mit Lagengeber das Band antreibt, über einen Soll-Ist-Vergleich und einen Verstärker nachgeregelt.

EP-A-0 142 613 zeigt einen Gängsspurrekorder ohne Kopftrommel wobei der Zeitbasiskorrekturpuffer auch zur Kompensation von Synchronisationsfehlern zwischen Bandtransport und Datengeschwindigkeit benützt wird.

Der Erfindung liegt die Aufgabe zugrunde, eine vereinfachte Regelung von Trommeldrehzahl und Bandvorschub eines Recorders anzugeben.

Diese Aufgabe wird durch die im Patentanspruch 1 angegebenen Maßnahmen gelöst. Vorteilhafte Weiterbildungen der Erfindung sind in Unteransprüchen genannt.

Die Rotationsgeschwindigkeit einer Kopfscheibe wird direkt von einem Taktgeber vorgegeben. Ein Regelkreis, der die Stellung der Kopfscheibe kontrolliert und mit einem Taktgeber vergleicht, entfällt.

Zum besseren Verständnis der Erfindung wird nachstehend ein Ausführungsbeispiel anhand von Zeichnungen näher erläutert.

Es zeigen:

Fig. 1 ein Blockschaltbild für die Aufnahme von Signalen und

Fig. 2 ein Blockschaltbild für die Wiedergabe von Signalen.

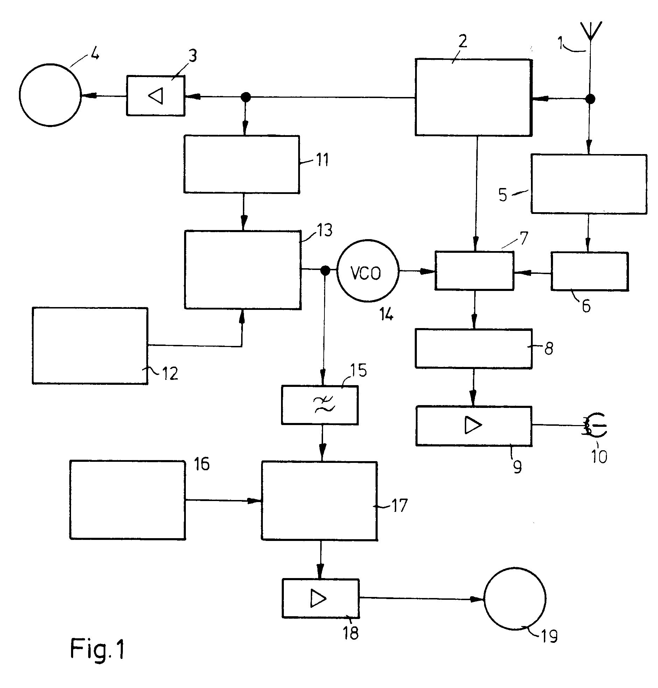

Fig. 1 zeigt eine Antenne 1, über die Fernsehsignale an eine Taktaufbereitung 2 gelangen. In der Taktaufbereitung 2 werden die Fernsehsignale demoduliert und die im Fernsehsignal vorhandenen Synchronsignale aufbereitet. Aus den Synchronsignalen werden Taktsignale gewonnen, die über einen Verstärker 3 auf einen Motor 4 gegeben werden. Die Taktsignale steuern als Regelgröße die Rotationsgeschwindigkeit des Motors 4. Der Motor 4 treibt eine nicht dargestellte Kopfscheibe oder eine Kopfradtrommel an, im folgenden als Kopfradscheibe bezeichnet. Die Signalaufbereitung 5 trennt das im Fernsehsignal vorhandene Videosignal von den Synchronsignalen und spaltet das Videosignal in seinen Luminanz- und Chrominanzanteil auf. Das Luminanz- und das Chrominanz Signal werden im A/D-Wandler 6 digitalisiert. Von dem A/D-Wandler 6 gelangen die digitalisierten Signale zu einem Buffer 7. Die deutsche Übersetzung für den englischen Ausdruck Buffer ist Puffer. In einem Puffer werden Digitalsignale gepuffert, d.h. kurzzeitig zwischengespeichert. Eine Pufferung erfolgt immer dann, wenn Digitalsignale von einem Systemtakt, enthalten in den mit der Antenne 1 empfangenen Signal, an einen anderen Systemtakt angepaßt werden, der auf dem Band gespeichert ist oder in aufbezeichneter Form gespeichert werden soll. Die in der Taktaufbereitung 2 erzeugten Taktsignale setzen sich aus den Horizontalsynchron- und aus den Vertikalsynchronimpulsen zusammen. Der Soll-Spuranfang 11 wertet die Vertikalsynchronimpulse aus und gibt sie auf einen Soll-Ist-Vergleich 13. In einem nicht dargestellten Abtaster bzw. nicht dargestellten Magnetkopf werden Impulse erzeugt, die als Ist-Winkel 12, Istspurende oder Istspuranfang bezeichnet werden. Diese Impulse werden als zweite Regelgröße dem Soll-Ist-Vergleich 13 zugeführt. Der Soll-Ist-Vergleich 13 liefert eine Regelgröße, die einen gesteuerten Oszillator 14, im folgenden VCO genannt (englisch: voltage controlled oscillator), steuert. Der VCO 14 liefert einen Systemtakt für den Buffer 7. Der Buffer 7 arbeitet als FIFO. FIFO ist die Abkürzung für den englischen Ausdruck first-in/first-out und bedeutet, daß Digitalsignale, die zuerst in einem Speicher eingeschrieben werden, auch als erstes wieder ausgelesen werden. Von dem Buffer 7 werden das digitalisierte Luminanz- und das digitalisierte Chrominanzsignal im folgenden als Daten bezeichnet, im Systemtakt auf einen Modulator 8 gegeben. Von dem Modulator 8 gelangen die modulierten Daten über einen Verstärker 9 an den Schreibkopf 10. Vom Schreibkopf 10 werden die Daten auf ein nicht dargestelltes Magnetband übertragen. Von dem Soll-Ist-Vergleich 13 wird eine Steuergröße über einen Kurzzeitintegrator 15, im folgenden als Tiefpaß bezeichnet, auf einen Soll-Ist-Vergleich 17 gegeben. Eine zweite Steuergröße empfängt der Soll-Ist-Vergleich 17 von einem Ist-Band-Vorschub 16. Der Soll-Ist-Vergleich 17 gibt eine Steuergröße ab, die über einen Verstärker 18 den Motor 19 für den Bandvorschub regelt. Der Ist-Band-Vorschub 16 erhält seine Steuergröße z.B. direkt vom Motor 19 oder einer Schwungmasse mit Lagengeber, die vom Motor 19 angetrieben wird. Der Buffer 7 ist so bemessen, daß er die Schreibgeschwindigkeit der modulierten Daten am Kopf 10 kontrollieren kann. Die Rotationsgeschwindigkeit der nicht dargestellten Kopfradscheibe, die vom Motor 4 angetrieben ist, wird durch die Taktimpulse, die von der Taktaufbereitung 2 ausgehen, konstant gehalten. In der Praxis sind vier Magnetköpfe 10 auf der nicht dargestellten Kopfradscheibe angeordnet. Stimmen Signalzuführung über die Signalaufbereitung 5 zum Kopf 10 mit der Stellung der Magnetköpfe 10 auf der nicht dargestellten Kopfradscheibe nicht überein, so wird der Buffer 7 als ausgleichender Zwischenspeicher benutzt.

In der P 35 09 584.9 ist ein Verfahren zur Aufzeichnung eines Signals auf einem bandförmigen Aufzeichnungsträger beschrieben, bei dem jeweils zeitlich aufeinanderfolgende, gegenüber der Länge des Trägers kurze Spurabschnitte auf dem Träger nebeneinander liegen. Dabei sind die kurzen Spurabschnitte blockweise geordnet und liegen etwa parallel zur Bandkante.

Spurende oder Spuranfang einer Spur auf einem Magnetband nach P 35 09 584.9 sind mit Synchronsignalen gekennzeichnet. Die zeitliche Dauer der auf dem Magnetband befindlichen Synchronsignale und die Dauer der über die Antenne 1 ankommenden in der Taktaufbereitung 2 herausgesiebten Synchronsignale, insbesondere Horizontal- und Vertikalsynchronsignale, stimmen nicht unbedingt überein. Ebenso stimmt die zeitliche Dauer des Fernsehsignales, das über die Antenne 1 hereinkommt, mit der zeitlichen Dauer der auf dem Magnetband befindlichen modulierten Daten nicht überein. Die Unterschiede werden durch den Buffer 7 ausgeglichen. Vorteilhaft entfällt dabei für den Motor 4 eine Regelschleife. Die zeitliche Dauer bei der Wiedergabe bzw. Aufnahme zwischen Spuranfang und Spurende einer Datenspur auf einem Magnetband, die vorteilhaft etwa mit dem zeitlichen Ende und dem zeitlichen Anfang eines Halbbildes zusammenfallen, werden durch auf dem Magnetband befindliche Synchronsignale vorgegeben. Die auf dem Magnetband befindlichen Synchronsignale werden von einem Kopf abgetastet, während gleichzeitig ein zweiter Kopf schreibt. Die auf dem Magnetband befindlichen Synchronsignale stammen aus einer Spur, die bereits aufgezeichnet ist.

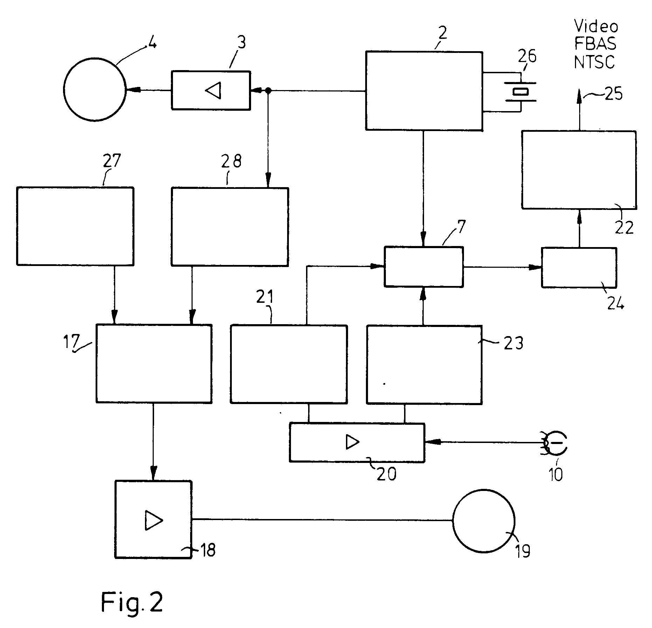

Fig. 2 zeigt ein Blockschaltbild für die Wiedergabe von Signalen, die von einem nicht dargestellten Magnetband abgetastet werden. Vom Magnetkopf 10 werden modulierte Daten, die von dem Magnetband abgetastet werden, über einen Verstärker 20 auf eine zweite Taktaufbereitung 21 und einen Demodulator 23 gegeben. Von dem Demodulator 23 gelangen die Daten auf den Buffer 7. Vom Buffer 7 gelangen das digitalisierte Luminanz- und das digitalisierte Chrominanzsignal zum D/A-Wandler 24. Dort werden die Signale in ein Analogsignal umgewandelt. Das analoge Luminanz- und das analoge Chrominanzsignal werden in der Signalaufbereitung 22 in ein FBAS-Signal (Farb-Bild-Austast-Synchron-Signal) umgewandelt. Ebenso können in der Signalaufbereitung 22 andere Videosignale, z.B. ein NTSC-(National Television System Commitee) oder ein Secam-(secuentielle à memoire) Signal erzeugt werden. Die Taktaufbereitung 2 weist einen Quarzoszillator 26 auf. Die Taktaufbereitung 2 steuert den Buffer 7 so, daß ein genormtes Video-Signal entstehen kann. Gleichzeitig steuert die Taktaufbereitung 2 mit ihrem Takt über den Verstärker 3 den Motor 4 für die Kopfradscheibe. Über die Taktaufbereitung 2 und die Soll-Spurlänge 28 kann die zeitliche Dauer für die Abtastung einer Spur auf dem Magnetband vorgegeben werden. In einem Soll-Ist-Vergleich 17 wird die Soll-Spurlänge 28 mit einer Ist-Spurlage 27, die über einen nicht dargestellten Kontrollkopf ermittelbar ist, verglichen. Der Soll-Ist-Vergleich 17 steuert über einen Verstärker 18 den Motor 19 für den Bandvorschub.

Der Buffer 7 dient auch hier dazu, um Zeitunterschiede zwischen Synchronsignalen eines genormten Videosignales und Synchronsignalen, die vom Kopf 10 von einem nicht dargestellten Magnetband abgetastet werden, auszugleichen.

In der Praxis puffert der Buffer 7 die digitalisierten Signale für die Helligkeit und/oder Farbe einer halben Fernsehzeile. Eine halbe Fernsehzeile weist etwa 360 Bildpunkte auf. Für jedes Signal eines Bildpunktes sind etwa 8 Bit vorgesehen. Werden Helligkeit und Farbe auf dem Magnetband aufgezeichnet, so wird ein Speicherraum von 2 x 360 x 8 Bit benötigt. Die Firma "Integrated Device Technology, Inc.", 3236 Scott Blvd., Santa Clara, CA 95051 stellt in einem Datenblatt zwei Bausteine IDT 7201 und IDT 7202, CMOS PARALLEL IN-OUT FIFO, 512 x 9 & 1024 x 9 Bit vor. Diese Bausteine können für den Buffer 7 verwendet werden. Die Rotationsgeschwindigkeit der Kopfradscheibe wird konstant gehalten. Unterschiede zwischen Eingangstakt eines Signales und Aufzeichnungstakt desselben Signales bei der Aufnahme und zwischen Lesetakt eines vom Magnetband kommenden Signales und Ausgabetakt des vom Magnetband kommenden Signales bei der Wiedergabe werden durch den Buffer 7 ausgeglichen.

**Patentansprüche**

1.   Recorder, insbesondere Videorecorder, zur Aufzeichnung und/oder Wiedergabe von Signalen auf bzw. von einem bandförmigen Aufzeichnungsträger, insbesondere von Digitalsignalen, mit einer von einem taktgesteuerten Motor (4) angetriebenen Kopfscheibe, **dadurch gekennzeichnet,** daß der Motor (4) ohne eine Regelung mit konstantem Takt angesteuert wird und daß ein Buffer (7) vorgesehen ist, dem ein gespeichertes oder zur Speicherung aufbereitetes Signal, das für die Motorsteuerung dienende Taktsignal und ein aufgezeichnetes oder zur Aufzeichnung aufbereitetes Taktsignal zugeführt werden und daß das Ausgangssignal des Buffers (7) bei der Aufnahme einem oder mehreren Köpfen (10) und bei der Wiedergabe dem Ausgangssignal (22, 24, 25) des Recorders zugeführt wird.

2. Recorder nach Anspruch 1, dadurch gekennzeichnet, daß der Buffer (7) Zeitunterschiede zwischen zwei verschiedenen Taktsystemen ausgleicht.

3. Recorder nach Anspruch 2, dadurch gekennzeichnet, daß während der Aufnahme der Auslesetakt für die Digitalsignale aus dem Buffer (7) der Rotationsgeschwindigkeit der Kopfscheibe angepaßt ist.

4. Recorder nach Anspruch 2, dadurch gekennzeichnet, daß während der Wiedergabe der Ausgabetakt der Digitalsignale aus dem Buffer (7) einem Videosignal angepaßt ist.

5. Recorder nach einem oder mehreren der vorhergehenden Ansprüche, dadurch gekennzeichnet, daß eine Taktaufbereitung (2) angeordnet ist.

6. Recorder nach einem oder mehreren der vorhergehenden Ansprüche, dadurch gekennzeichnet, daß die Taktaufbereitung (2) den Buffer (7) steuert.

7. Recorder nach einem oder mehreren der vorhergehenden Ansprüche, dadurch gekennzeichnet, daß die Taktaufbereitung (2) die Rotationsgeschwindigkeit der Kopfscheibe steuert.

8. Recorder nach einem oder mehreren der vorhergehenden Ansprüche, dadurch gekennzeichnet, daß die Taktaufbereitung (2) zwei oder mehrere Taktsysteme erzeugt.

9. Recorder nach einem oder mehreren der vorhergehenden Ansprüche, dadurch gekennzeichnet, daß ein Taktsystem aus den Synchronsignalen eines genormten Videosignales abgeleitet ist.

10. Recorder nach einem oder mehreren der vorhergehenden Ansprüche, dadurch gekennzeichnet, daß ein Taktsystem aus einem Quarzoszillator (26) abgeleitet ist.

11. Recorder nach einem oder mehreren der vorhergehenden Ansprüche, dadurch gekennzeichnet, daß die Signalaufbereitung (22) ein Signal erzeugt.

12. Recorder nach Anspruch 11, dadurch gekennzeichnet, daß das Signal ein genormtes Videosignal ist.

## Claims

1. Recorder, in particular video recorder, for the recording and/or reproduction of signals on or from a tape-type record carrier, in particular digital signals, with a head disc driven by a clock-actuated motor (4), characterised in that the motor (4) is driven without a control unit at a constant clocking rate, and that a buffer (7) is provided to which there are fed a stored signal or one processed for storage, the clock signal serving to control the motor, and a recorded clock signal or one processed for recording, and that the output signal of the buffer (7) is fed for the recording to one or more heads (10) and for the reproduction to the output signal (22, 24, 25) of the recorder.

2. Recorder according to claim 1, characterised in that the buffer (7) balances out time differences between two different clocking systems.

3. Recorder according to claim 2, characterised in that during the recording the readout clocking rate for the digital signals from the buffer (7) is adjusted to the rotational speed of the head disc.

4. Recorder according to claim 2, characterised in that during the reproduction the output clocking rate of the digital signals from the buffer (7) is adjusted to a video signal.

5. Recorder according to one or more of the foregoing claims, characterised in that a clock-pulse processing unit (2) is provided.

6. Recorder according to one or more of the foregoing claims, characterised in that the clock-pulse processing unit (2) controls the buffer (7).

7. Recorder according to one or more of the foregoing claims, characterised in that the clock-pulse processing unit (2) controls the rotational speed of the head disc.

**8.** Recorder according to one or more of the foregoing claims, characterised in that the clock-pulse processing unit (2) generates two or more clocking systems.

**9.** Recorder according to one or more of the foregoing claims, characterised in that a clocking system is derived from the synchronization signals of a standardized video signal.

**10.** Recorder according to one or more of the foregoing claims, characterised in that a clocking system is derived from a quartz oscillator (26).

**11.** Recorder according to one or more of the foregoing claims, characterised in that the signal processing unit (22) generates a signal.

**12.** Recorder according to claim 11, characterised in that the signal is a standardized video signal.

**Revendications**

**1.** Enregistreur, en particulier magnétoscope, pour l'enregistrement et/ou la reproduction de signaux sur et/ou d'un support d'enregistrement en forme de bande, en particulier de signaux numériques, avec un disque de tête vidéo entraîné par un moteur (4) commandé par rythmeur, **caractérisé en ce que** le moteur (4) est excité avec un cycle constant sans réglage et qu'un tampon (7) est prévu auquel sont amenés un signal mémorisé ou traité pour être mémorisé, le signal de cycle servant à la commande du moteur et un signal de cycle enregistré ou traité pour être enregistré et que le signal de sortie du tampon (7) est amené, lors de l'enregistrement, à une ou plusieurs têtes (10) et, lors de la reproduction, au signal de sortie (22, 24, 25) de l'enregistreur.

**2.** Enregistreur selon la revendication 1, **caractérisé en ce que** le tampon (7) compense les différences dans le temps entre deux systèmes différents de cycles.

**3.** Enregistreur selon la revendication 2, **caractérisé en ce que** pendant l'enregistrement le cycle de sortie des signaux numériques provenant du tampon (7) est adapté à la vitesse de rotation du disque de la tête.

**4.** Enregistreur selon la revendication 2, **caractérisé en ce que** pendant la reproduction le cycle de sortie des signaux numériques provenant du tampon (7) est adapté à un signal vidéo.

**5.** Enregistreur selon l'une ou plusieurs des revendications précédentes, **caractérisé en ce qu'**il y a un dispositif de traitement des cycles (2).

**6.** Enregistreur selon l'une ou plusieurs des revendications précédentes, **caractérisé en ce que** le dispositif de traitement des cycles (2) commande le tampon (7).

**7.** Enregistreur selon l'une ou plusieurs des revendications précédentes, **caractérisé en ce que** le dispositif de traitement des cycles (2) commande la vitesse de rotation du disque de la tête.

**8.** Enregistreur selon l'une ou plusieurs des revendications précédentes, **caractérisé en ce que** le dispositif de traitement des cycles (2) produit deux ou plusieurs systèmes de cycles.

**9.** Enregistreur selon l'une ou plusieurs des revendications précédentes, **caractérisé en ce qu'**un système de cycles est dérivé des signaux de synchronisation d'un signal vidéo normalisé.

**10.** Enregistreur selon l'une ou plusieurs des revendications précédentes, **caractérisé en ce qu'** un système de cycles est dérivé d'un oscillateur à cristal (26).

**11.** Enregistreur selon l'une ou plusieurs des revendications précédentes, **caractérisé en ce que** le dispositif de traitement des signaux (22) produit un signal.

**12.** Enregistreur selon la revendication 11, **caractérisé en ce que** le signal est un signal vidéo normalisé.

Fig.1

Fig.2